# FASCICULE DE BREVET EUROPEEN

(11) **EP 4 461 657 B1**
(45) Date de publication et mention de la délivrance du brevet: **04.02.2026**
(21) Numéro de dépôt: 24170448.5
(22) Date de dépôt: 16.04.2024
(51) Int. Cl.: B64U 70/10, F41F 3/00

(54) **DISPOSITIF PERFECTIONNÉ DE LANCEMENT D'UN DRONE PAR POUSSÉE À RESSORT, PROCÉDÉ DE LANCEMENT DE DRONES À L'AIDE DE CE DISPOSITIF**
VERBESSERTE VORRICHTUNG ZUM STARTEN EINER DROHNE DURCH FEDERSCHUB, VERFAHREN ZUM STARTEN VON DROHNEN MIT DIESER VORRICHTUNG
IMPROVED DEVICE FOR LAUNCHING A DRONE BY MEANS OF SPRING THRUST, METHOD FOR LAUNCHING DRONES USING SAID DEVICE

(30) Priorité: 09.05.2023 FR 2304464
(43) Date de publication de la demande: 13.11.2024
(73) Titulaire: KNDS France, 78034 Versailles Cedex (FR)
(72) Inventeur: GAUTIER, Pierre, 18023 BOURGES (FR)
(74) Mandataire: Cabinet Chaillot

(56) Documents cités:
- CN-A- 111 572 801
- CN-B- 113 247 290
- GB-A- 1 324 195
- US-A1- 2022 185 501
- US-B2- 7 967 237
- US-B2- 9 453 705

## Description

Le domaine technique de l'invention est celui des dispositifs de lancement pour drones, et plus spécifiquement, celui des dispositifs de lancement pour drones de type par poussée à ressort.

Les drones ou aéronefs commandés à distance permettent d'emporter une charge utile destinée à des missions à vocation civile ou militaire, de surveillance, de renseignement, de combat ou de transport. Engins volant de taille réduite, moins chers et plus simples à mettre en œuvre qu'un aéronef embarquant un pilote, les drones connaissent un essor important.

Plusieurs moyens de lancement de drone sont connus, parmi lesquels les dispositifs de lancement à tube de lancement.

Le but de ces dispositifs à tube de lancement est de propulser le drone à quelques mètres au-dessus du véhicule portant le tube de lancement pour le déploiement de ce drone. Cela permet d'éviter tout contact du drone avec les antennes montées sur le véhicule et permet une mise en œuvre rapide.

Il existe de nombreux types de dispositifs de lancement à tube de lancement, parmi lesquels les dispositifs de type par poussée à ressort dans lesquels un ressort de compression prend appui contre l'extrémité arrière d'un tube de lancement et appuie sur un élément d'éjection monté coulissant dans le tube de lancement et contre lequel le drone sera placé. On arme le dispositif en comprimant le ressort de compression puis en verrouillant en position l'élément d'éjection, le dispositif étant alors en position armée. Le déverrouillage est commandé par un mécanisme de détente qui provoque la libération du ressort et le lancement du drone, poussé par l'élément d'éjection.

Un tel type de dispositif de lancement est divulgué dans la demande de brevet chinois CN111572801 A, dans lequel le mécanisme de détente est un mécanisme rotatif entraîné en rotation par un moteur. De même, la compression du ressort, après le lancement du drone, est mise en œuvre par une motorisation intégrée au dispositif et se situant dans le tube de lancement.

Cependant, l'utilisation de tels moyens motorisés augmente le coût et le poids du dispositif de lancement, et ne permet pas d'obtenir une compacité optimale, notamment car ils limitent le volume susceptible d'accueillir un drone dans le tube de lancement.

C'est donc le but de l'invention que de proposer un dispositif de lancement ne présentant pas ces inconvénients.

La solution selon la présente invention repose sur l'utilisation d'un mécanisme de détente comprenant un électro-aimant apte à déplacer au moins un élément de détente, lequel déplacement est obtenu par l'action d'un champ magnétique créé par l'activation de l'électro-aimant et conduit au déverrouillage de l'élément d'éjection. Cette solution est compacte et permet notamment de réduire les coûts et le poids du dispositif. La solution selon la présente invention repose également sur l'utilisation d'un mécanisme de repositionnement automatique couplé à l'au moins un élément de détente et permettant d'augmenter la sécurité lors du repositionnement du dispositif dans la position armée et verrouillée.

La présente invention a donc pour objet un dispositif de lancement d'un drone par poussée à ressort, dispositif comprenant un tube de lancement longitudinal ayant une première extrémité, arrière, qui est fermée et une seconde extrémité, avant, qui est ouverte, et dont l'intérieur définit une chambre de lancement destinée à recevoir un drone, et des moyens d'éjection du drone hors du tube de lancement qui comprennent :
- un ensemble d'éjection comprenant un élément d'éjection, monté coulissant longitudinalement dans la chambre de lancement et destiné à pousser le drone pour l'éjecter hors du tube de lancement, et un ressort de compression, dit d'éjection, ayant un axe longitudinal coaxial à l'axe longitudinal du tube de lancement et dont une première extrémité prend appui sur l'extrémité arrière du tube de lancement et une seconde extrémité appuie contre l'élément d'éjection, l'ensemble d'éjection étant apte à être placé dans une position armée, dans laquelle le ressort d'éjection est comprimé par l'élément d'éjection,
- des moyens de verrouillage pour verrouiller de manière libérable l'ensemble d'éjection dans la position armée, les moyens de verrouillage comprenant au moins un élément de retenue relié au tube de lancement et déplaçable entre une position de verrouillage, dans laquelle l'au moins un élément de retenue est engagé avec l'élément d'éjection de manière à maintenir l'ensemble d'éjection dans la position armée, à l'encontre de l'action du ressort d'éjection, et une position de déverrouillage, dans laquelle l'au moins un élément de retenue est désengagé de l'élément d'éjection, et
- des moyens de commande pour commander le déverrouillage de l'ensemble d'éjection, par déplacement de l'au moins un élément de retenue de la position de verrouillage à la position de déverrouillage, caractérisé par le fait que les moyens de commande comprennent :

- un logement de détente, situé à l'arrière du tube de lancement et contenant un électro-aimant apte à être relié à une source d'électricité,
- au moins un élément de détente qui est déplaçable dans le logement de détente, sous l'action d'un champ magnétique créé par l'activation de l'électro-aimant, d'une position de repos, dans laquelle l'au moins un élément de détente retient l'au moins un élément de retenue dans la position de verrouillage, à une position de détente, dans laquelle l'au moins un élément de détente a déplacé l'au moins un élément de retenue de la position de verrouillage à la position de déverrouillage, et
- des moyens de rappel de l'au moins un élément de détente vers la position de repos après désactivation de l'électro-aimant,
et par le fait que les moyens d'éjection comprennent en outre un mécanisme de repositionnement automatique couplé à l'au moins un élément de détente et agencé pour déplacer l'au moins un élément de détente entre les positions de repos et de détente, en l'absence d'activation de l'électro-aimant, sous l'effet d'un déplacement de l'élément d'éjection jusqu'à sa position armée, le mécanisme de repositionnement automatique autorisant un déplacement de l'au moins un élément de détente de la position de repos à la position de détente, à l'encontre des moyens de rappel, avant le placement de l'élément d'éjection en position armée et autorisant un déplacement de l'au moins un élément de détente de la position de détente à la position de repos, sous l'effet des moyens de rappel, une fois l'élément d'éjection placé en position armée.

En d'autres termes, le ressort d'éjection est maintenu à l'état comprimé par l'utilisation d'au moins un élément de retenue qui entrave le coulissement longitudinal de l'élément d'éjection en position de verrouillage. Le désengagement de l'au moins un élément de retenue vis-à-vis de l'élément d'éjection, sous l'effet de l'activation d'un électro-aimant, permettant l'éjection de l'élément d'éjection.

De tels moyens de commande du déverrouillage sont réactifs et fiables.

De tels moyens de commande sont également sûrs. En effet, lorsque l'au moins un élément de détente est en position de repos, l'au moins un élément de retenue est empêché par l'au moins un élément de détente de se déplacer en position de déverrouillage, l'au moins un élément de retenue étant autorisé à se déplacer vers sa position de déverrouillage uniquement lorsque l'au moins un élément de détente est en position de détente.

Le mécanisme de repositionnement automatique permet, lors de la recharge, c'est-à-dire lors de la compression du ressort d'éjection de son état initial détendu à son état comprimé, de déplacer l'au moins un élément de retenue, via l'au moins un élément de détente, dans la position de déverrouillage afin de permettre à l'élément d'éjection d'être déplacé vers la position armée, et de replacer automatiquement l'au moins un élément de retenue, via l'au moins un élément de détente, en position de verrouillage une fois l'élément déjection placé dans la position armée afin de verrouiller automatiquement l'élément d'éjection en position armée. Un tel mécanisme permet donc une recharge simple et sûre.

Lesdits moyens de rappel peuvent être des moyens élastiques, comme par exemple un ressort.

De préférence, le logement de détente se présente sous la forme d'un cylindre creux extérieur qui est solidaire du tube de lancement et d'un cylindre creux intérieur solidaire du cylindre creux extérieur et de diamètre inférieur à celui du cylindre creux extérieur de telle sorte qu'un espace tubulaire est formé entre ceux-ci, les cylindres creux extérieur et intérieur ayant des axes longitudinaux coaxiaux, l'électro-aimant étant de forme cylindrique creuse et étant disposé entre un premier côté axial, arrière, du cylindre creux extérieur et un premier côté axial, arrière, du cylindre creux intérieur avec son axe longitudinal coaxial à celui des cylindres creux extérieur et intérieur, et l'élément de détente est une broche de détente en un matériau ferromagnétique montée dans le cylindre creux intérieur et dans l'électro-aimant de manière coulissante selon l'axe longitudinal du logement de détente. Un tel dispositif, comportant des éléments cylindriques creux, présente une très bonne compacité.

Pour améliorer encore la compacité des moyens d'éjection, avantageusement, le logement de détente est entouré par le ressort d'éjection, le ou chaque élément de retenue est réalisé en un matériau ferromagnétique et est reçu dans une ouverture traversante prévue dans le cylindre creux intérieur et d'axe perpendiculaire à l'axe longitudinal du logement de détente, et l'élément d'éjection comprend une tête de poussée qui est perpendiculaire à l'axe longitudinal du tube de lancement et contre laquelle la seconde extrémité du ressort d'éjection appuie, et au moins un organe de maintien qui est solidaire de la tête de poussée et s'étend dans l'espace tubulaire, dans la position de verrouillage, l'au moins un élément de retenue faisant saillie dans l'espace tubulaire et étant configuré pour maintenir l'ensemble d'éjection dans la position armée par saisie de l'au moins un organe de maintien, et dans la position de déverrouillage, l'au moins un élément de retenue faisant saillie dans le cylindre creux intérieur et étant configuré de manière à venir en contact avec la broche de détente sur le trajet de la broche de détente. En d'autres termes, l'au moins une ouverture traversante recevant l'au moins un élément de retenue débouche d'une part dans le trajet de la broche de détente et d'autre part dans le trajet de l'au moins un organe de maintien, et l'au moins un élément de retenue est configuré pour saillir soit sur le trajet de l'au moins un organe de maintien soit sur le trajet de la broche de détente.

Avantageusement, la broche de détente comporte au moins une gorge externe agencée de manière à se trouver en regard de l'au moins une ouverture traversante du cylindre creux intérieur uniquement en position de détente et configurée pour recevoir la partie de l'au moins un élément de retenue en saillie dans le cylindre creux intérieur en position de déverrouillage, et par le fait que l'au moins un organe de maintien comporte au moins une gorge interne agencée de manière à se trouver en regard de l'au moins une ouverture traversante du cylindre creux intérieur uniquement en position armée et configurée pour recevoir la partie de l'au moins un élément de retenue en saillie dans l'espace tubulaire en position de verrouillage.

Avantageusement, la broche de détente comporte une unique gorge externe formée sur la totalité de la circonférence externe de la broche, et l'organe de maintien se présente sous la forme d'un cylindre creux comportant une unique gorge interne formée sur la totalité de la circonférence interne dudit cylindre creux.

Selon un mode de réalisation particulier, l'au moins un élément de retenue se présente sous la forme d'une bille, par exemple réalisée en acier, et déplaçable entre la position de verrouillage et la position de déverrouillage par translation le long de l'ouverture traversante associée. Un tel élément de retenue est simple, résistant et peu coûteux.

De préférence, les gorges interne et externe sont de forme complémentaire de celle de la ou des billes.

Avantageusement, le dispositif comprend plusieurs éléments de retenue, de préférence, trois éléments de retenue montés chacun mobile en translation dans une ouverture traversante respective du cylindre creux intérieur.

De préférence, la course de déplacement de la broche de détente entre les positions de repos et de détente est limitée d'une part, par une butée axiale solidaire d'un premier côté axial de la broche de détente et apte à venir en appui contre un premier côté axial, arrière, de l'électro-aimant en position de repos, et d'autre part, par un épaulement formé sur la broche de détente et apte à venir en appui contre un second côté axial, avant, de l'électro-aimant en position de détente, les moyens de rappel de la broche de détente vers la position de repos étant des moyens de rappel élastique, tel qu'un ressort de compression, prenant appui sur le second côté axial, avant, du cylindre creux intérieur et appuyant contre un second côté axial de la broche de détente.

Selon un mode de réalisation particulier de l'invention, le mécanisme de repositionnement automatique est reçu dans un logement interne de la broche de détente et comprend un guide monté mobile axialement dans le logement interne, selon l'axe longitudinal du logement de détente, et configuré pour coopérer avec l'élément d'éjection, un ressort dit souple monté entre et en appui contre le guide et une bague de guidage qui est traversée par le guide et montée coulissante dans le logement interne, un ressort dit dur monté entre la broche de détente et un marteau lui-même monté coulissant dans le logement interne, les ressorts souple et dur étant des ressorts de compression concentriques et coaxiaux à l'axe longitudinal du logement de détente, et une butée ressort interposée entre le marteau et la bague de guidage et venant en contact avec ceux-ci, la butée ressort étant déplaçable entre une position excentrée par rapport à l'axe longitudinal du logement interne, dans laquelle le guide n'est pas autorisé à se déplacer axialement à l'encontre du ressort souple, et une position centrée, dans laquelle le guide est apte à se déplacer à l'encontre du ressort souple, les moyens de rappel étant configurés de telle sorte que l'effort à appliquer pour s'opposer à l'action des moyens de rappel est inférieur à l'effort de compression à appliquer pour déformer élastiquement le ressort dur et supérieur à l'effort de compression à appliquer pour déformer élastiquement le ressort souple. Un tel mécanisme permet donc un repositionnement simple et en toute sécurité de l'élément d'éjection en position armée et verrouillé, sans détériorer les propriétés de compacité du dispositif.

Avantageusement, le logement interne comporte deux parois cylindriques reliées entre elles par une rampe présentant une paroi inclinée convergente en direction du ressort dur et agencée pour coopérer avec la butée ressort lorsque de ressort dur est comprimé de manière à placer la butée ressort dans sa position centrée, la butée ressort se présentant sous la forme d'un cylindre creux dont le diamètre extérieur est inférieur au diamètre intérieur de la paroi cylindrique côté divergent de la rampe et dont le diamètre intérieur autorise le passage du guide à travers la butée ressort en position centrée, la butée ressort comportant un aimant sollicitant la butée ressort en contact avec la paroi cylindrique du logement interne lorsque la butée ressort est reçue au niveau de la paroi cylindrique, de manière à placer la butée ressort en position excentrée.

Avantageusement, le dispositif comprend deux éléments annulaires pour limiter le déplacement axial du guide dans le logement interne, les deux éléments annulaires étant solidaires de la paroi du logement interne et agencés de telle sorte que lorsque les ressorts dur et souple sont détendus le guide vient en butée contre l'élément annulaire dit avant apte à être traversé par une partie de l'élément d'éjection venant en appui contre le guide en position armée, et que lorsque le ressort souple est comprimé le guide vient en butée contre l'élément annulaire dit arrière, côté face dirigée vers l'élément annulaire avant, la bague de guidage venant en appui contre la face de l'élément annulaire arrière opposée à la face dirigée vers l'élément annulaire avant lorsque le ressort dur est détendu. Ainsi, l'élément annulaire avant permet d'éviter que le guide ne soit éjecté hors du logement interne de la broche en cas de défaillance du ressort souple. De même l'élément annulaire arrière permet d'éviter tout déplacement inapproprié de l'ensemble bague de guidage-butée ressort-marteau en cas de défaillance du ressort dur.

La présente invention a également pour objet un procédé de lancement de drones à l'aide d'un dispositif de lancement par poussée à ressort tel que défini ci-dessus, caractérisé par le fait qu'il comprend les étapes successives suivantes : - une étape de positionnement, comprenant positionner un drone dans la chambre de lancement, l'ensemble d'éjection étant verrouillé dans la position armée ; - une étape de lancement du drone, comprenant activer l'électro-aimant pour déplacer l'élément de détente de la position de repos à la position de détente, ce par quoi l'ensemble d'éjection est déverrouillé et éjecte le drone hors du tube de lancement ; et - avant la répétition de l'étape de positionnement, une étape de repositionnement, comprenant ramener l'ensemble d'éjection dans la position armée, dans laquelle il est verrouillé par l'au moins un élément de retenue.

Pour mieux illustrer l'objet de la présente invention, on va en décrire ci-après un mode de réalisation particulier, avec référence aux dessins annexés. Sur ces dessins :
[Fig. 1] est une vue de côté, en coupe longitudinale, du dispositif de lancement selon le mode de réalisation particulier de la présente invention, dans la position armée ;
[Fig. 2] est une vue de côté, en coupe longitudinale, montrant plus spécifiquement les moyens d'éjection du dispositif de la Figure 1 dans la position armée ;
[Fig. 3] est une vue de côté, en coupe longitudinale, montrant les moyens d'éjection du dispositif de la Figure 1 dans la position de lancement ;
[Fig. 4] est une vue en perspective éclatée des moyens de verrouillage, des moyens de commande et du mécanisme de repositionnement automatique ;
[Fig. 5] est une vue de côté, en coupe longitudinale, montrant les moyens de verrouillage et les moyens de commande dans la position de repos après l'éjection d'un drone ;
[Fig. 6] est une vue de côté, en coupe longitudinale, montrant les moyens d'éjection lors d'une première étape du repositionnement de l'ensemble d'éjection dans la position armée ;
[Fig. 7] est une vue de côté, en coupe longitudinale, montrant les moyens d'éjection lors d'une deuxième étape du repositionnement de l'ensemble d'éjection dans la position armée ; et
[Fig. 8] est une vue de côté, en coupe longitudinale, montrant les moyens d'éjection lors d'une troisième étape du repositionnement de l'ensemble d'éjection dans la position armée.

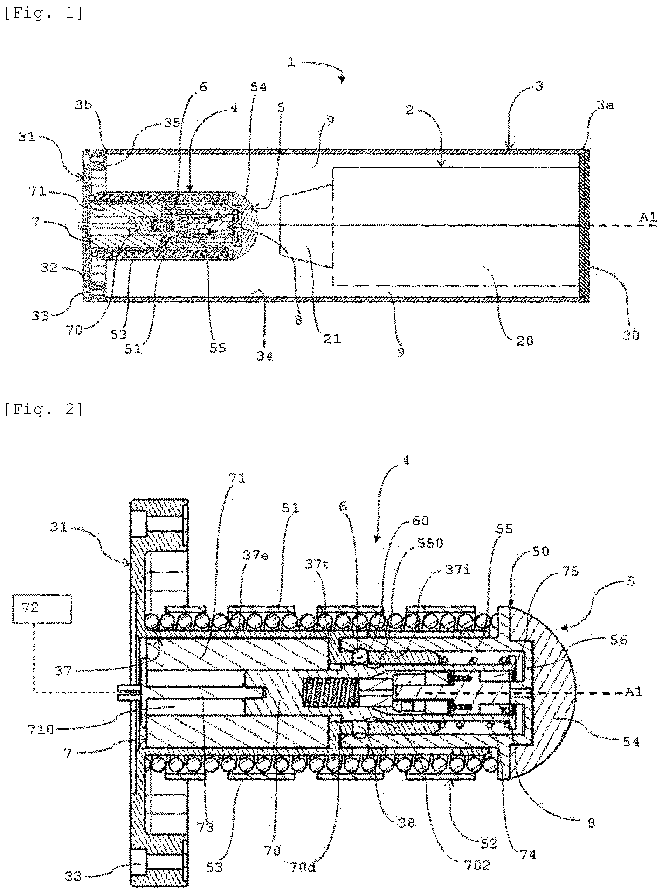

Si l'on se réfère tout d'abord à la Figure 1, on peut voir que le dispositif 1 de lancement selon la présente invention est destiné au lancement d'un objet de type drone 2.

Un tel drone 2 comprend, de manière classique, un corps de base 20 contenant un groupe motopropulseur, un bloc batterie et une électronique de navigation. Le drone 2 est équipé d'une charge utile 21 montée de manière amovible sur le corps de base 20. Cette charge utile 21 peut être une charge létale ou non létale. Par exemple, le drone 2 pourrait être équipé d'une charge létale de type explosive, d'une charge non létale permettant de lâcher de la peinture ou un fumigène, ou encore d'une charge optronique permettant l'observation et la détection.

Comme on peut le voir sur la Figure 1, le dispositif 1 comprend un tube de lancement 3 d'axe longitudinal A1, destiné à recevoir l'objet à lancer, à savoir le drone 2, avant son lancement, et des moyens d'éjection 4 pour éjecter le drone 2.

Le tube de lancement 3 présente une forme générale cylindrique autour de son axe longitudinal A1, et il a une extrémité avant 3a formant l'embouchure pour la sortie du drone 2 et une extrémité arrière 3b dans la région de laquelle sont agencés les moyens d'éjection 4.

On souligne ici que les termes « avant » et « arrière » s'entendent par référence au sens prédéterminé de déplacement du drone 2 par rapport au tube de lancement 3 lors du lancement.

L'extrémité avant 3a est fermée, avant le lancement, par un bouchon étanche 30 de forme circulaire dont le diamètre correspond au diamètre extérieur du tube de lancement 3.

L'extrémité arrière 3b est fermée par un culot 31 qui se présente sous la forme d'un bloc de section circulaire, dont le diamètre correspond au diamètre externe du tube de lancement 3. Le culot 31 est fixé à un épaulement intérieur 32 du tube de lancement 3, de forme annulaire, par des organes de fixation 33, tels que des vis, traversant des orifices prévus dans le culot 31 et des orifices prévus dans l'épaulement intérieur 32 et situés en regard les uns des autres.

Le tube de lancement 3 défini à l'intérieur de celui-ci une chambre de lancement 34 cylindrique présentant, dans la région de l'extrémité arrière 3b, un siège 35, ici formé par l'épaulement intérieur 32, contre lequel le drone 2 sera placé avant éjection hors du tube de lancement 3 par les moyens d'éjection 4.

Les moyens d'éjection 4 comprennent un ensemble d'éjection 5 apte à être placé dans une position armée, des moyens de verrouillage 6 pour verrouiller de manière libérable l'ensemble d'éjection 5 dans la position armée, des moyens de commande 7 pour commander le déverrouillage de l'ensemble d'éjection 5, et un mécanisme de repositionnement automatique 8 pour permettre à l'ensemble d'éjection 5 d'être placé à nouveau dans la position armée et verrouillée.

Comme on peut le voir sur les Figures 1 à 3 et 6 à 8, l'ensemble d'éjection 5 comprend un élément d'éjection 50 et un ressort d'éjection 51 qui consiste en un ressort de compression.

Dans le présent mode de réalisation particulier, l'élément d'éjection 50 se présente sous la forme d'un piston d'éjection 52 ayant un corps de piston 53, une tête de poussée 54 et un corps de maintien 55.

Le corps de piston 53 est un corps cylindrique creux ayant un premier côté axial 53a, dirigé vers l'extrémité arrière 3b du tube de lancement 3, qui est ouvert, et un second côté axial 53b, dirigé vers l'extrémité avant 3a du tube de lancement 3, qui est fermé par une paroi transversale 56. Cette paroi transversale 56 ferme également un côté du corps de maintien 55. Le corps de piston 53, le corps de maintien 55 et la paroi transversale 56 sont formés d'un seul tenant.

Le corps de maintien 55 est un corps cylindrique creux s'étendant à partir de la paroi transversale 56 et dont l'axe longitudinal est coaxial à l'axe longitudinal A1. Le corps de maintien 55 a un premier côté axial 55a, dirigé vers l'extrémité arrière 3b du tube de lancement 3, qui est ouvert, et un second côté axial 55b, dirigé vers l'extrémité avant 3a du tube de lancement 3, qui est fermé par la paroi transversale 56. Le diamètre externe du corps de maintien 55 est inférieur au diamètre interne du corps de piston 53. Ainsi, un espace tubulaire est défini entre la paroi externe du corps de maintien 55 et la paroi interne du corps de piston 53. L'espace tubulaire est agencé et dimensionné de telle sorte que le ressort d'éjection 51 est reçu à l'intérieur de cet espace tubulaire.

Le corps de maintien 55 s'étend de manière coulissante dans un espace tubulaire 36 formé dans un logement de détente 37. Ce logement de détente 37 s'étend à l'intérieur du corps de piston 53. Ce logement 37 comprend un cylindre creux extérieur 37e s'étendant à partir du culot 31 et ayant un côté avant, à savoir dirigé vers l'extrémité avant 3a du tube de lancement 3, ouvert et un cylindre creux intérieur 37i porté par le cylindre creux extérieur 37e et ayant un côté avant ouvert et un côté arrière ouvert. Le cylindre creux extérieur 37e et le cylindre creux intérieur 37i sont reliés entre eux par une paroi transversale 37t annulaire.

Le cylindre creux extérieur 37e s'étend perpendiculairement à partir de la paroi transversale du culot 31, autrement dit parallèlement audit axe longitudinal A1, en direction de l'extrémité avant 3a du tube de lancement 3. Le cylindre creux intérieur 37i s'étend également parallèlement audit axe longitudinal A1 à l'intérieur du cylindre creux extérieur 37e. Les diamètres des cylindres creux extérieur 37e et intérieur 37i sont définis de telle sorte que l'espace tubulaire 36 formé entre ceux-ci est apte à recevoir le corps de maintien 55 avec la paroi extérieure du corps de maintien 55 qui vient en contact avec la paroi intérieure du cylindre creux extérieur 37e et la paroi intérieure du corps de maintien 55 qui vient en contact avec la paroi extérieure du cylindre creux intérieur 37i. De préférence, le logement de détente 37 est formé d'un seul tenant avec le culot 31.

Le logement de détente 37 est dimensionné de telle sorte qu'il est contenu à l'intérieur du corps de piston 53 dans la position armée de l'ensemble d'éjection 5, et que l'extrémité libre du corps de maintien 55, au niveau du premier côté axial 55a, vient en contact avec la paroi transversale annulaire 37t dans la position armée de l'ensemble d'éjection 5.

Le corps de maintien 55 comporte, au niveau de sa région d'extrémité libre, opposée à sa région d'extrémité reliée à la paroi transversale 56, une gorge interne 550 destinée à recevoir les moyens de verrouillage 6 dans la position de verrouillage. La gorge interne 550 est formée sur la totalité de la circonférence intérieure du corps de maintien 55.

Le ressort d'éjection 51 se situe dans l'espace formé entre la paroi extérieure du logement de détente 37 et la paroi intérieure du corps de piston 53, entre l'extrémité arrière 3b du tube de lancement 3 et la paroi transversale 56. Plus précisément, le ressort d'éjection 51 a une première extrémité prenant appui sur la paroi transversale du culot 31 et une seconde extrémité en appui contre la paroi transversale 56, rendues solidaires de celles-ci par tout moyen approprié.

La tête de poussée 54 est un corps de forme hémisphérique solidaire de la paroi transversale 56, côté extérieur du corps de piston 53. Le diamètre de la base de ce corps hémisphérique est égal au diamètre extérieur du corps de piston 53.

La paroi transversale 56 comporte, en son centre, du côté opposé à la tête de poussée 54, une saillie centrale 56a cylindrique qui s'étend à l'intérieur du corps de maintien 55, à partir de la paroi transversale 56. La saillie centrale 56a s'étend selon l'axe longitudinal A1.

Les moyens de verrouillage 6 permettent de maintenir le ressort d'éjection 51 à l'état comprimé, et donc d'empêcher un coulissement du piston d'éjection 52 vers l'extrémité avant 3a du tube de lancement 3, ce par quoi ils maintiennent l'ensemble d'éjection 5 dans la position armée.

Dans le mode de réalisation particulier représenté sur les Figures 1 à 8, les moyens de verrouillage 6 comprennent trois éléments de retenue 60.

Chaque élément de retenue 60 est monté mobile en translation dans une ouverture traversante 38 tubulaire pratiquée dans le cylindre creux intérieur 37i. Chaque ouverture traversante 38 s'étend selon un axe de translation radial, perpendiculaire à l'axe longitudinal A1, les trois ouvertures traversantes 38 étant situées dans un même plan transversal. Chaque ouverture traversante 38 débouche d'une part dans l'espace tubulaire 36 du logement de détente 37 et d'autre part à l'intérieur du cylindre creux intérieur 37i. Les ouvertures traversantes 38 sont agencées de telle sorte qu'elles se trouvent en regard de la gorge interne 550 du corps de maintien 5 dans la position armée.

Chaque élément de retenue 60 se présente ici sous la forme d'une bille 60 de diamètre sensiblement égal au diamètre de l'ouverture traversante 38 tubulaire. L'épaisseur de paroi du cylindre creux intérieur 37i, et donc la longueur de chaque ouverture traversante 38 tubulaire est inférieure au diamètre de la bille 60 reçue dans l'ouverture 38. Ainsi, lorsque la bille 60, au niveau d'une ses calottes, est à fleur avec la paroi intérieure du cylindre creux intérieur 37i, sa région de calotte opposée fait saillie dans l'espace tubulaire 36. Inversement, lorsque la bille 60, au niveau d'une calotte, est à fleur avec la paroi extérieure du cylindre creux intérieur 37i, sa région de calotte opposée fait saillie à l'intérieur du cylindre creux intérieur 37i. Chaque bille 60 est réalisée en un matériau ferromagnétique, de préférence en acier trempé. La région de chaque bille 60 apte à faire saillie dans l'espace tubulaire 36 est dimensionnée de manière à être apte à être reçue dans la gorge interne 550, de forme complémentaire, du corps de maintien 55.

Les moyens de commande 7 sont destinés à commander le déplacement des éléments de retenue 60 vers leur position de déverrouillage, par l'action d'un champ magnétique.

Les moyens de commande 7 comprennent un élément de détente 70 et un électro-aimant 71 apte à être relié à une source d'électricité 72.

L'électro-aimant 71 est disposé à l'arrière du tube de lancement 3 et s'étend du culot 31 à la paroi transversale annulaire 37t. L'électro-aimant 71 est un corps cylindrique de diamètre extérieur sensiblement égal au diamètre intérieur du cylindre creux extérieur 37e. L'électro-aimant 71 présente un passage cylindrique 710 le traversant selon l'axe longitudinal A1. Le diamètre du passage 710 est inférieur au diamètre intérieur du cylindre creux intérieur 37i, de sorte que la face de l'électro-aimant coopérant avec la paroi transversale 37t annulaire et faisant saillie latéralement à l'intérieur du cylindre creux intérieur 37i forme une surface d'arrêt 711 circulaire.

La source d'électricité 72 peut être toute source d'électricité. Pour des raisons d'encombrement, la source d'électricité 72 est avantageusement une source d'électricité externe, c'est-à-dire qu'elle est disposée à l'extérieur du tube de lancement 3 et est apte à être mise en connexion avec l'électro-aimant 71 au niveau de l'extrémité arrière du culot 31.

L'élément de détente 70 se présente sous la forme d'une broche de détente réalisée en un matériau ferromagnétique. La broche de détente 70 est montée coulissante dans le passage 710 et dans le cylindre creux intérieur 37i. Ainsi, le trajet de déplacement en translation de la broche 70 se situe à l'intérieur du cylindre creux intérieur 37i, tandis que le trajet de déplacement en translation du corps de maintien 55 se situe à l'extérieur du cylindre creux intérieur 37i, le trajet de la broche 70 et le trajet du corps de maintien 55 communiquant tous les deux avec les ouvertures traversantes 38 recevant les billes 60. La broche de détente 70 est un corps cylindrique ayant un premier côté axial 70a, dirigé vers l'extrémité arrière 3b du tube de lancement 3, qui est fermé, et un second côté axial 70b, dirigé vers l'extrémité avant 3a du tube de lancement 3, qui est ouvert et formé par une extrémité annulaire 70c. Le premier côté axial 70a est solidaire d'une butée axiale 73. La butée axiale 73 comporte une partie tige 73a dont une extrémité est rendue solidaire de la broche 70 et dont l'autre extrémité porte une partie disque 73b. La partie tige 73a s'étend dans le passage 710, selon l'axe longitudinal A1, et la partie disque 73b s'étend perpendiculairement à la partie tige 73a à l'extérieur du passage 710. La butée axiale 73 est dimensionnée de telle sorte que, dans la position de repos, la partie disque 73b vient en appui contre la face de l'électro-aimant 71 côté culot 31. Cette butée axiale 73 permet de limiter la course de la broche de détente 70, à savoir son coulissement, en direction de l'extrémité avant du logement de détente 37.

La broche de détente 70 comporte une première section cylindrique 700 et une seconde section cylindrique 701 de diamètre supérieur à celui de la première section cylindrique 700, de telle sorte qu'un épaulement 70d est formé entre les deux sections 700, 701. La première section cylindrique 700 s'étend du premier côté axial 70a à l'épaulement 70d et la seconde section cylindrique 701 s'étend de l'épaulement 70d à l'extrémité annulaire 70c. L'épaulement 70d est agencé et dimensionné de telle sorte qu'il vient en contact avec la surface d'arrêt 711 lorsque la broche 70 est dans la position de détente. La première section cylindrique 700 a un diamètre sensiblement égal au diamètre du passage 710. La seconde section cylindrique 701 a un diamètre sensiblement égal au diamètre intérieur du cylindre creux intérieur 37i.

La broche 70 comporte une gorge externe 702 destinée à recevoir les moyens de verrouillage 6 dans la position de déverrouillage. À cet effet, la gorge externe 702 est disposée sur la seconde section cylindrique 701, à une distance de l'épaulement 70d qui est égale à la distance axiale entre la surface d'arrêt 711 et le bord arrière des ouvertures traversantes 38. La gorge externe 702 est de forme complémentaire de celle des billes 60 et est formée sur la totalité de la circonférence extérieure de la broche 70.

Un ressort de compression 74 s'étend autour de la broche 70, en particulier autour de la seconde section cylindrique 701. Ce ressort 74 a son extrémité avant reliée à l'extrémité annulaire 70c et son extrémité arrière reliée à l'extrémité libre du cylindre creux intérieur 37i, par tout moyen approprié. Ce ressort 74 est un ressort de rappel destiné à solliciter la broche de détente 70 vers l'extrémité avant 3a du tube de lancement 3, autrement dit à l'opposé de la surface d'arrêt 711. Ainsi, une fois que la broche de détente 70 n'est plus soumise au champ magnétique de l'électro-aimant 71, la broche de détente 70 est automatiquement ramenée vers sa position de repos, à savoir vers une position dans laquelle la broche de détente 70 place les éléments de retenue 60 en position de verrouillage.

Ainsi, l'activation de l'électro-aimant 71 par passage d'un courant vers les bornes de l'électro-aimant 71 provoque sous l'action du champ magnétique créé, un déplacement de la broche de détente 70 en direction de l'électro-aimant 71 jusqu'à ce que l'épaulement 70d vienne en butée contre la surface d'arrêt 711. Autrement dit, l'électro-aimant 71 sollicite en déplacement la broche 70 de la position de repos à la position de détente à l'encontre de l'action du ressort de rappel 74. Dans la position de repos de la broche 70, la seconde section cylindrique 701 vient en contact avec les billes 60 qui se retrouvent poussées en position de verrouillage dans le trajet du corps de maintien 55. Dans la position de détente de la broche 70, la gorge externe 702 se trouve en regard des ouvertures traversantes 38 et les billes 60 en acier sont attirées dans la gorge externe 702 sous l'effet du champ magnétique, de telle sorte que les billes 60 ne se trouvent plus dans le trajet du corps de maintien 55 qui est donc libre de coulisser vers l'extrémité avant 3a du tube de lancement 3.

La broche de détente 70 délimite un logement interne 75 ayant une extrémité arrière 75a fermée et une extrémité avant 75b ouverte débouchant au niveau de l'extrémité annulaire 70c. Ce logement interne 75 s'étend axialement selon l'axe longitudinal A1. Le logement interne 75 est délimité par une première paroi cylindrique 750, une seconde paroi cylindrique 751 et une rampe conique présentant une paroi inclinée 752. La première paroi cylindrique 750 s'étend entre l'extrémité arrière 75a et l'extrémité convergente de la rampe. La seconde paroi cylindrique 751 s'étend entre l'extrémité divergente de la rampe et l'extrémité avant 75b. Ainsi, le diamètre de la seconde paroi cylindrique 751 est supérieur au diamètre de la première paroi cylindrique 750.

Le mécanisme de repositionnement automatique 8 est reçu dans un logement interne 75. Ce mécanisme 8 comprend un guide 80, un ressort souple 81, une bague de guidage 82, un ressort dur 83, un marteau 84 et une butée ressort 85.

Le guide 80 est destiné à coopérer avec l'élément d'éjection 50, en particulier avec la saillie centrale 56a de l'élément d'éjection 50, avant l'éjection. Ainsi, l'élément d'éjection 50, avant son éjection et lors de son repositionnement en position armée, coopère avec le mécanisme 8 logé dans la broche 70 via le guide 80, mais ne coopère pas directement avec la broche 70. Le guide 80 comporte une tête 80a cylindrique, une saillie 80b cylindrique et une tige 80c cylindrique, d'un seul tenant. La tête 80a est une tête cylindrique creuse montée coulissante axialement dans la seconde paroi cylindrique 751 et a un diamètre extérieur sensiblement égal au diamètre de la seconde paroi cylindrique 751. La saillie 80b s'étend à partir de la face de la tête 80a dirigée vers l'extrémité avant 75b, de manière centrale, selon l'axe longitudinal A1. En position armée, l'extrémité libre de la saillie 80b est au niveau de l'extrémité ouverte 75b, et après l'éjection, la saillie 80b fait saillie hors du logement interne 75. La tige 80c s'étend axialement à l'intérieur de la seconde paroi cylindrique 751, selon l'axe longitudinal A1, à partir de la face de la tête 80a opposée à la saillie 80b. La tige 80c est reçue, de manière coulissante, à travers un orifice traversant 820 pratiqué dans la bague de guidage 82. La bague de guidage 82 est une bague cylindrique ayant un diamètre extérieur sensiblement égal au diamètre de la seconde paroi cylindrique 751. La bague de guidage 82 est montée coulissante le long de cette seconde paroi 751.

Le ressort souple 81 est monté autour de la tige 80c et est relié d'une part à la bague de guidage 82 et d'autre part au guide 80, l'extrémité du ressort souple 81 solidaire du guide 80 étant reçue dans la tête 80a du guide 80. Ce ressort souple 81 est un ressort de compression de raideur inférieure à la raideur du ressort de rappel 74 sollicitant la broche 70 en position de repos. Ce ressort souple 81 est destiné à solliciter le guide à 80 l'opposé de la bague de guidage 82.

La butée ressort 85 est également un corps cylindrique traversé par un passage 850 cylindrique central et pourvue d'un aimant 851. Ce passage 850 est dimensionné pour être apte à recevoir la tige 80c du guide 80 de manière coulissante. Le diamètre extérieur de la butée ressort 85 est inférieur au diamètre de la seconde paroi cylindrique 751 et supérieur au diamètre de l'extrémité convergente de la paroi inclinée 752. Ainsi, la butée ressort 85 est apte à se déplacer à la fois au niveau de la seconde paroi 751 et au niveau de la paroi inclinée 752. Lorsque la butée ressort 85 se trouve en contact avec la paroi inclinée 752, la paroi inclinée 752 amène la butée ressort 85 en position centrée, l'aimant 851 n'étant plus en contact avec la paroi du logement interne 75. L'aimant 851 est agencé de telle sorte que lorsque la butée ressort 85 se trouve au niveau de la seconde paroi cylindrique 751 elle vient en contact, par sa section comportant l'aimant 851, avec la seconde paroi 751, son passage traversant 850 se trouvant alors désaxé par rapport à l'axe longitudinal A1 et donc par rapport à l'axe de la tige 80c. La butée ressort 85 est interposée entre la bague de guidage 82 et le marteau 84.

Le marteau 84 est un corps cylindrique de diamètre extérieur égal au diamètre de la première paroi cylindrique 750. Ainsi, le marteau 84 est monté coulissant le long de la première paroi 750 et est apte à s'étendre au-delà de la première paroi 750.

Le ressort dur 83 est monté entre l'extrémité fermée 75a du logement interne 75 et le marteau 84. Le diamètre du ressort dur 83 est sensiblement égal au diamètre de la première paroi cylindrique 750 et donc au diamètre du marteau 84. Ce ressort dur 83 est un ressort de compression de raideur supérieure à la raideur du ressort de rappel 74 sollicitant la broche 70 en position de repos. Ce ressort dur 83 est destiné à solliciter l'ensemble comprenant le marteau 84, la butée ressort 85 et la bague de guidage 82 à l'opposé de l'extrémité fermée 75a, autrement dit à solliciter la butée ressort 85 vers sa position excentrée.

Ce mécanisme 8 comprend en outre deux éléments annulaires 86a, 86b de type circlips agencés dans le logement interne 75 et destinés à servir de butée limitant le déplacement des différents éléments du mécanisme 8. Les circlips 86a, 86b s'étendent orthogonalement à l'axe longitudinal A1 et ont une ouverture centrale d'axe coaxial à l'axe longitudinal A1. Le circlips avant 86b est solidaire de la broche 70 au niveau de l'extrémité annulaire 70c ouverte et son ouverture est dimensionnée pour être apte à être traversée par la saillie 80b du guide 80. Le circlips arrière 86a est solidaire de la broche 70 au niveau de la seconde paroi 751 du logement interne 75 et son ouverture est dimensionnée pour être traversée par la tige 80c du guide 80. Le circlips arrière 86a est disposé de telle sorte que lorsque le ressort dur 83 est détendu, la bague de guidage 82 vient en appui contre le circlips arrière 86a.

Si l'on se réfère à nouveau à la Figure 1, on peut voir que le dispositif 1 comprend en outre un sabot de lancement 9 destiné à recevoir le drone 2.

Le sabot de lancement 9 est dimensionné et configuré pour être reçu dans la chambre de lancement 34 afin de permettre le guidage du drone 2 dans le tube de lancement 3 lors de la phase de lancement, et pour entourer le drone 2 afin de permettre de protéger le drone 2 lors du lancement. Il convient de souligner qu'un sabot 9 différent est défini suivant le profil du drone 2 et de sa charge utile 21.

Ce sabot 9 définit un espace de réception de drone 2 ayant une ouverture destinée à être située en regard de l'extrémité avant 3a du tube de lancement 3, ainsi qu'un espace de réception des moyens d'éjection 4, ayant une ouverture destinée à permettre le passage des moyens d'éjection 4 lorsque le sabot 9 est introduit dans la chambre de lancement 34.

Le dispositif 1 de lancement selon la présente invention permet le lancement de drones 2 de manière aisée, rapide, fiable, et sécurisée, le procédé de lancement comprenant une phase de pré-lancement, une phase de lancement et une phase de post-lancement.

Lors de la phase de pré-lancement (Figures 1 et 2), on introduit tout d'abord le sabot de lancement 9, dans l'espace de réception duquel est reçu le drone 2, par l'extrémité avant 3a ouverte du tube de lancement 3, jusqu'à venir le placer en contact contre le siège 35, puis l'on ferme l'extrémité avant 3a du tube de lancement 3 par le bouchon étanche 30.

Lors de cette phase, les moyens d'éjection 4 se placent dans l'espace de réception des moyens d'éjection du sabot **9.** En particulier, l'ensemble d'éjection 5 est dans la position armée, le ressort d'éjection 51 étant comprimé et la broche de détente 70 plaçant et retenant les éléments de retenue 60 en position de verrouillage.

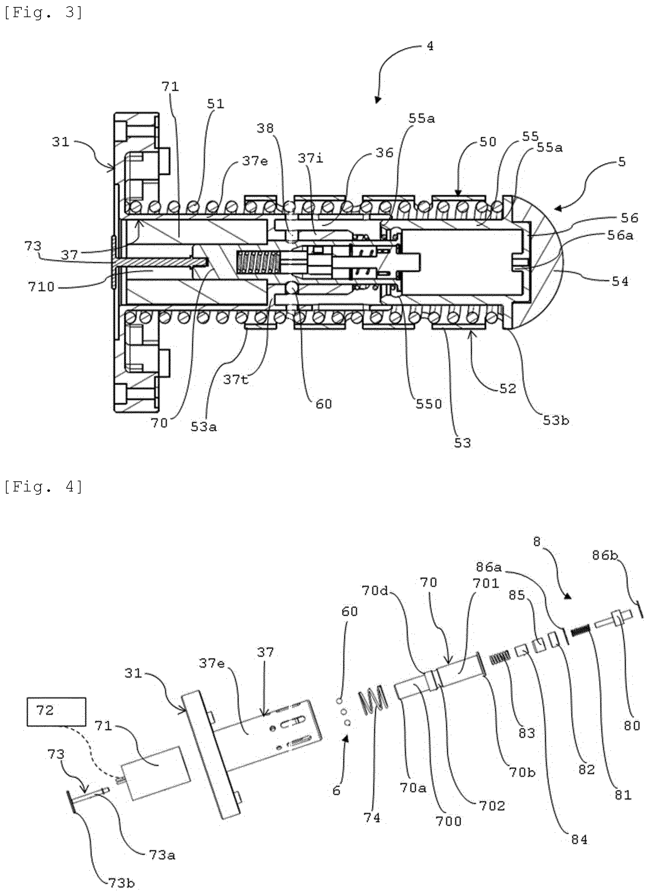

Lorsque l'on souhaite lancer le drone 2, lors de la phase de lancement, il suffit de faire passer un courant électrique vers l'électro-aimant 71. Le champ magnétique créé par l'électro-aimant 71 va alors solliciter en déplacement la broche de détente 70 en direction de l'électro-aimant **71,** jusqu'à ce que l'épaulement 70d de la broche de détente 70 vienne en appui contre la surface d'arrêt 711 de l'électro-aimant 71. Pour cela, l'effort magnétique généré dans la broche 70 doit être plus important que l'effort du ressort de rappel 74. À l'issue de ce mouvement de coulissement, la gorge externe 702 de la broche de détente 70 vient en regard des éléments de retenue 60 et amènent ceux-ci à se déplacer en translation vers l'intérieur du cylindre creux intérieur 37i jusqu'à ce qu'ils soient engagés dans la gorge externe 702 et donc désengagés de la gorge interne 550 du corps de maintien 55. Une fois les éléments de retenue 60 désengagés du corps de maintien 55, donc rétractés en position de déverrouillage, le corps de maintien 55 se trouve libéré et le piston d'éjection 52 se retrouve libre de coulisser et ne maintient plus le ressort d'éjection 51 à l'état comprimé. Le ressort d'éjection 51 est donc libéré instantanément et sa détente provoque le coulissement soudain du piston d'éjection 52 en direction de l'extrémité avant 3a du tube de lancement 3 (Figure 3). Dans cette position, la tête de poussée 54 vient appliquer un effort de poussée contre le sabot 9, éjectant ainsi le sabot 9 et le drone 2 qu'il contient hors du tube de lancement 3. Une fois à son apogée, le drone 2 démarre, se stabilise et sa mission peut commencer.

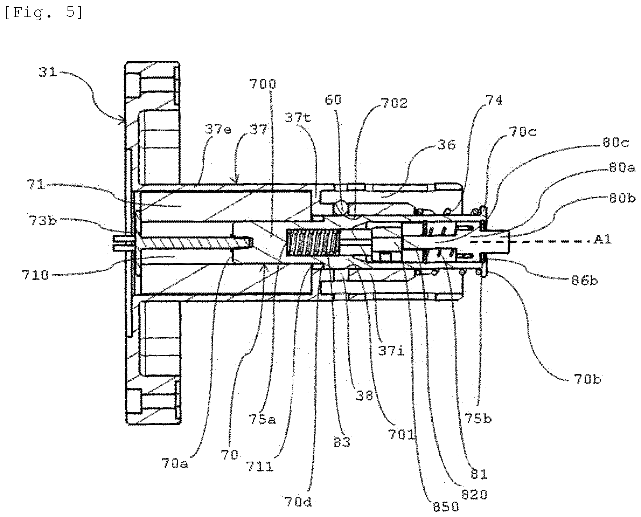

Après l'éjection du sabot 9 et du drone 2, l'électro-aimant 71 est désactivé et donc les billes 60 et la broche de détente 70 ne sont plus soumises à un champ magnétique. La broche de détente 70 est alors ramenée à la position de repos par le ressort 74, ce qui pousse les billes 60 vers leur position de verrouillage dans le trajet du corps de maintien 55. La broche 70 étant dans sa position de repos, les billes 60 sont arrêtées contre la paroi 701 de la broche 70 de même diamètre que le diamètre interne du cylindre creux intérieur 37i et sont donc empêchées de se rétracter sur le trajet de la broche 70. En d'autres termes, lorsque les billes 60 sont en position de verrouillage et que la broche 70 est en position de repos, les billes 60 sont retenues de manière sûre en position de verrouillage par la broche 70. Comme on peut le voir sur la Figure 5, dans cette position de repos, le ressort 74, le ressort souple 81 et le ressort dur 83 sont à l'état détendu. Le guide 80 vient en butée contre le circlips avant 86b sous l'action du ressort souple 81. De même, sous l'action du ressort dur 83, le marteau 84, la butée ressort 85 et la bague de guidage 82 sont poussés vers l'avant et viennent en appui contre le circlips arrière 86a. La butée ressort 85 est donc dans la position excentrée en contact avec la paroi du logement interne 75 de la broche 70, sous l'action de l'aimant 851. La broche de détente 70 est retenue par sa butée axiale 73. Dans cette position, les moyens d'éjection 4 sont prêts à être rechargés, autrement dit à être replacés dans leur position armée et verrouillée.

Lors de la phase de post-lancement, il convient de préparer le dispositif 1 de lancement en vue du lancement d'un autre drone 2, autrement dit, de repositionner l'ensemble d'éjection 5 dans sa position armée, au cours de laquelle le ressort d'éjection 51 est à nouveau comprimé.

Cette phase est mise en œuvre par tout outil (non représenté) approprié, distinct du dispositif 1, apte à être introduit dans la chambre de lancement 34, après l'étape de lancement, lequel outil est apte à venir en appui contre l'élément d'éjection 50 afin de le déplacer en direction de l'extrémité arrière 3b du tube de lancement 3 de façon à comprimer le ressort d'éjection 51 et à ramener l'ensemble d'éjection 5 dans la position armée.

En pratique, lors de la phase de post-lancement, l'outil est positionné dans le tube de lancement 3. L'élément d'éjection 50 est alors déplacé progressivement en translation, en direction de l'extrémité arrière 3b du tube de lancement 3, comprimant ainsi progressivement le ressort d'éjection 51. Lors de ce déplacement en translation, l'élément d'éjection 50 exerce un effort de poussée F sur le guide 80, lequel effort de poussée F est appliqué selon l'axe longitudinal A1, donc selon l'axe de translation de l'élément d'éjection 50, du guide 80 et de la broche 70.

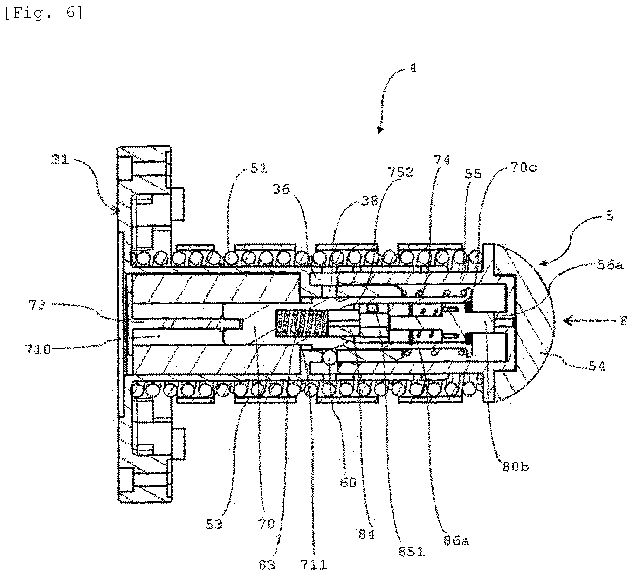

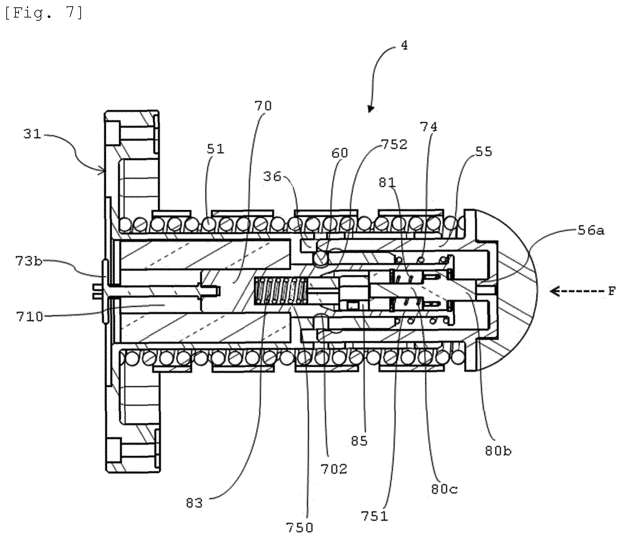

Comme on peut le voir sur les Figures 6 et 7, lors du déplacement en translation de l'élément d'éjection 50, la saillie centrale 56a de l'élément d'éjection 50 vient en appui contre la saillie 80b du guide 80. La butée ressort 85 étant en position excentrée, la tige 80c du guide 80 ne peut pas traverser la butée ressort 85. De ce fait, le ressort souple 81 n'est pas comprimé sous l'effet de cet effort de poussée F sur le guide 80 en direction de l'extrémité arrière 3b. C'est donc le ressort de rappel 74, de raideur inférieure à celle du ressort dur 83, qui va se comprimer. La compression de ce ressort 74 amène la broche de détente 70 à se déplacer en translation en direction de l'électro-aimant 71, jusqu'à ce que l'épaulement 70d de la broche 70 vienne en appui contre la surface d'arrêt 711 de l'électro-aimant 71, la broche 70 étant alors placée en position de détente. Dans cette position de détente, les billes 60 se trouvent en face de la gorge externe 702 et sont amenées, par la translation du corps de maintien 55, à rentrer dans la gorge externe 702 de la broche 70. En effet, lorsque la broche 70 est en position de détente et que l'électro-aimant 71 est désactivé, les billes sont autorisées à se déplacer vers leur position de déverrouillage par une action de poussée exercée par le corps de maintien 55 sur les billes 60. Les billes 60 se trouvent alors en position de déverrouillage, dans laquelle elles ne sortent pas sur le trajet du corps de maintien 55 et n'entravent plus son déplacement en translation vers l'arrière. Ainsi, lors de cette phase, le mécanisme de repositionnement automatique 8 permet à l'élément d'éjection 50 de se déplacer en translation vers la position armée de l'ensemble d'éjection 5, malgré la présence du ressort 74 de rappel de la broche 70 vers la position de repos.

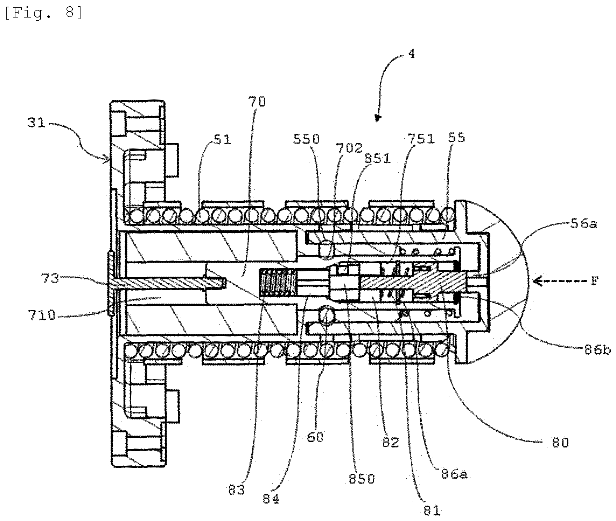

Ensuite, comme on peut le voir sur la Figure 8, une fois que la gorge interne 550 du corps de maintien 55 se trouve en regard des billes 60, la poursuite de l'effort de poussée F appliqué par l'élément d'éjection 50 sur le guide 80 amène le ressort dur 83 à se comprimer. En raison de l'effort de poussée F sur le guide 80 en direction de l'extrémité arrière 3b, le guide 80 pousse la bague de guidage 82, la butée ressort 85 et le marteau 84 vers l'extrémité arrière 3b. Lors de ce déplacement en translation, la butée ressort 85 vient en appui contre la paroi inclinée 752, ce qui conduit au centrage de la butée ressort 85 dans l'axe de la tige 80c. Une fois la butée ressort 85 en position centrée, la tige 80c du guide 80 peut traverser le passage 850 de la butée ressort 85 sous l'effet de la détente du ressort dur 83. A son tour, le ressort de rappel 74 de la broche 70, qui était comprimé, se détend jusqu'à ce que la broche 70 occupe la position de repos. Dans cette position de repos, la broche 70 est retenue axialement par la butée axiale 73 qui vient en butée contre l'électro-aimant 71. Le ressort souple 81 se retrouve comprimé. La bague de guidage 82, la butée ressort 85 et le marteau 84 viennent en appui contre le circlips arrière 86a. Lors de ce passage de la broche 70 dans la position de repos, les billes 60 sont poussées par la broche 70 vers leur position de verrouillage, jusqu'à ce que les billes 60 s'engagent dans la gorge interne 550 du corps de maintien 55, empêchant alors l'élément d'éjection 50 d'être éjecté. Ainsi, le mécanisme de repositionnement automatique 8 permet un verrouillage automatique de l'élément d'éjection 50 dès que la position armée est atteinte. La sécurité est donc maximale lors de la recharge.

Comme on peut le voir sur la Figure 2, à l'issue de cette étape, l'ensemble d'éjection 5 est dans sa position armée et verrouillée, avec le ressort d'éjection 51 placé dans son état comprimé, prêt pour une nouvelle phase de lancement. L'outil utilisé pour la recharge est alors retiré du tube de lancement 3 et un nouveau sabot 9 peut ensuite être positionné dans la chambre de lancement 34, et les phases précédentes répétées pour le lancement de ce drone 2 et d'autres drones.

Il est bien entendu que le mode de réalisation particulier qui vient d'être décrit a été donné à titre indicatif et non limitatif, et que des modifications peuvent être apportées sans que l'on s'écarte pour autant du cadre de la présente invention comme défini dans le jeu de revendications suivantes.

## Revendications

1. Dispositif (1) de lancement d'un drone (2) par poussée à ressort, ledit dispositif (1) comprenant un tube de lancement (3) longitudinal ayant une première extrémité (3b), arrière, qui est fermée et une seconde extrémité (3a), avant, qui est ouverte, et dont l'intérieur définit une chambre de lancement (34) destinée à recevoir ledit drone (2), et des moyens (4) d'éjection du drone (2) hors du tube de lancement (3) qui comprennent :
- un ensemble d'éjection (5) comprenant un élément d'éjection (50), monté coulissant longitudinalement dans la chambre de lancement (34) et destiné à pousser le drone (2) pour l'éjecter hors du tube de lancement (3), et un ressort de compression, dit d'éjection (51), ayant un axe longitudinal coaxial à l'axe longitudinal (A1) du tube de lancement (3) et dont une première extrémité prend appui sur l'extrémité arrière (3b) du tube de lancement (3) et une seconde extrémité appuie contre l'élément d'éjection (50), l'ensemble d'éjection (5) étant apte à être placé dans une position armée, dans laquelle le ressort d'éjection (51) est comprimé par l'élément d'éjection (50),
- des moyens de verrouillage (6) pour verrouiller de manière libérable l'ensemble d'éjection (5) dans la position armée, les moyens de verrouillage (6) comprenant au moins un élément de retenue (60) relié au tube de lancement (3) et déplaçable entre une position de verrouillage, dans laquelle l'au moins un élément de retenue (60) est engagé avec l'élément d'éjection (50) de manière à maintenir l'ensemble d'éjection (5) dans la position armée, à l'encontre de l'action du ressort d'éjection (51), et une position de déverrouillage, dans laquelle l'au moins un élément de retenue (60) est désengagé de l'élément d'éjection (50), et
- des moyens de commande (7) pour commander le déverrouillage de l'ensemble d'éjection (5), par déplacement de l'au moins un élément de retenue (60) de la position de verrouillage à la position de déverrouillage,
**caractérisé par le fait que** les moyens de commande (7) comprennent :
- un logement de détente (37) situé à l'arrière du tube de lancement (3) et contenant un électro-aimant (71) apte à être relié à une source d'électricité (72),
- au moins un élément de détente (70) qui est déplaçable dans le logement de détente (37), sous l'action d'un champ magnétique créé par l'activation de l'électro-aimant (71), d'une position de repos, dans laquelle l'au moins un élément de détente (70) retient l'au moins un élément de retenue (60) dans la position de verrouillage, à une position de détente, dans laquelle l'au moins un élément de détente (70) a déplacé l'au moins un élément de retenue (60) de la position de verrouillage à la position de déverrouillage, et
- des moyens (74) de rappel de l'au moins un élément de détente (70) vers la position de repos après désactivation de l'électro-aimant (71),
et **par le fait que** les moyens (4) d'éjection comprennent en outre un mécanisme de repositionnement automatique (8) couplé à l'au moins un élément de détente (70) et agencé pour déplacer l'au moins un élément de détente (70) entre les positions de repos et de détente, en l'absence d'activation de l'électro-aimant (71), sous l'effet d'un déplacement de l'élément d'éjection (50) jusqu'à sa position armée, le mécanisme de repositionnement automatique (8) autorisant un déplacement de l'au moins un élément de détente (70) de la position de repos à la position de détente, à l'encontre des moyens (74) de rappel, avant le placement de l'élément d'éjection (50) en position armée et autorisant un déplacement de l'au moins un élément de détente (70) de la position de détente à la position de repos, sous l'effet des moyens (74) de rappel, une fois l'élément d'éjection (50) placé en position armée.

2. Dispositif (1) selon la revendication 1, **caractérisé par le fait que** le logement de détente (37) se présente sous la forme d'un cylindre creux extérieur (37e) qui est solidaire du tube de lancement (3) et d'un cylindre creux intérieur (37i) solidaire du cylindre creux extérieur (37e) et de diamètre inférieur à celui du cylindre creux extérieur (37e) de telle sorte qu'un espace tubulaire (36) est formé entre ceux-ci, les cylindres creux extérieur (37e) et intérieur (37i) ayant des axes longitudinaux coaxiaux, l'électro-aimant (71) étant de forme cylindrique creuse et étant disposé entre un premier côté axial, arrière, du cylindre creux extérieur (37e) et un premier côté axial, arrière, du cylindre creux intérieur (37i) avec son axe longitudinal coaxial à celui des cylindres creux extérieur (37e) et intérieur (37i), et l'élément de détente (70) est une broche de détente (70) en un matériau ferromagnétique montée dans le cylindre creux intérieur (37i) et dans l'électro-aimant (71) de manière coulissante selon l'axe longitudinal du logement de détente (37).

3. Dispositif (1) selon la revendication 2, **caractérisé par le fait que** le logement de détente (37) est entouré par le ressort d'éjection (51), le ou chaque élément de retenue (60) est réalisé en un matériau ferromagnétique et est reçu dans une ouverture traversante (38) prévue dans le cylindre creux intérieur (37i) et d'axe perpendiculaire à l'axe longitudinal du logement de détente (37), et l'élément d'éjection (50) comprend une tête de poussée (54) qui est perpendiculaire à l'axe longitudinal (A1) du tube de lancement (3) et contre laquelle la seconde extrémité du ressort d'éjection (51) appuie, et au moins un organe de maintien (55) qui est solidaire de la tête de poussée (54) et s'étend dans l'espace tubulaire (36), dans la position de verrouillage, l'au moins un élément de retenue (60) faisant saillie dans l'espace tubulaire (36) et étant configuré pour maintenir l'ensemble d'éjection (5) dans la position armée par saisie de l'au moins un organe de maintien (55), et dans la position de déverrouillage, l'au moins un élément de retenue (60) faisant saillie dans le cylindre creux intérieur (37i) et étant configuré de manière à venir en contact avec la broche de détente (70) sur le trajet de la broche de détente (70).

4. Dispositif (1) selon la revendication 3, **caractérisé par le fait que** la broche de détente (70) comporte au moins une gorge externe (702) agencée de manière à se trouver en regard de l'au moins une ouverture traversante (38) du cylindre creux intérieur (37i) uniquement en position de détente et configurée pour recevoir la partie de l'au moins un élément de retenue (60) en saillie dans le cylindre creux intérieur (37i) en position de déverrouillage, et **par le fait que** l'au moins un organe de maintien (55) comporte au moins une gorge interne (550) agencée de manière à se trouver en regard de l'au moins une ouverture traversante (38) du cylindre creux intérieur (37i) uniquement en position armée et configurée pour recevoir la partie de l'au moins un élément de retenue (60) en saillie dans l'espace tubulaire (36) en position de verrouillage.

5. Dispositif (1) selon l'une quelconque des revendications 3 et 4, **caractérisé par le fait que** l'au moins un élément de retenue (60) se présente sous la forme d'une bille et déplaçable entre la position de verrouillage et la position de déverrouillage par translation le long de l'ouverture traversante associée.

6. Dispositif (1) selon l'une quelconque des revendications 2 à 5, **caractérisé par le fait que** la course de déplacement de la broche de détente (70) entre les positions de repos et de détente est limitée d'une part, par une butée axiale (73) solidaire d'un premier côté axial (70a) de la broche de détente (70) et apte à venir en appui contre un premier côté axial, arrière, de l'électro-aimant (71) en position de repos, et d'autre part, par un épaulement (70d) formé sur la broche de détente (70) et apte à venir en appui contre un second côté axial, avant, de l'électro-aimant (71) en position de détente, les moyens (74) de rappel de la broche de détente (70) vers la position de repos étant des moyens de rappel élastique, tel qu'un ressort de compression (74), prenant appui sur le second côté axial, avant, du cylindre creux intérieur (37i) et appuyant contre un second côté axial (70b) de la broche de détente (70).

7. Dispositif (1) selon l'une quelconque des revendications 2 à 6, **caractérisé par le fait que** le mécanisme de repositionnement automatique (8) est reçu dans un logement interne (75) de la broche de détente (70) et comprend un guide (80) monté mobile axialement dans le logement interne (75), selon l'axe longitudinal du logement de détente (37), et configuré pour coopérer avec l'élément d'éjection (50), un ressort dit souple (81) monté entre et en appui contre le guide (80) et une bague de guidage (82) qui est traversée par le guide (80) et montée coulissante dans le logement interne (75), un ressort dit dur (83) monté entre la broche de détente (70) et un marteau (84) lui-même monté coulissant dans le logement interne (75), les ressorts souple (81) et dur (83) étant des ressorts de compression concentriques et coaxiaux à l'axe longitudinal du logement de détente (37), et une butée ressort (85) interposée entre le marteau (84) et la bague de guidage (82) et venant en contact avec ceux-ci, la butée ressort (85) étant déplaçable entre une position excentrée par rapport à l'axe longitudinal du logement interne (37), dans laquelle le guide (80) n'est pas autorisé à se déplacer axialement à l'encontre du ressort souple (81), et une position centrée, dans laquelle le guide (80) est apte à se déplacer à l'encontre du ressort souple (81), les moyens (74) de rappel étant configurés de telle sorte que l'effort à appliquer pour s'opposer à l'action des moyens (74) de rappel est inférieur à l'effort de compression à appliquer pour déformer élastiquement le ressort dur (83) et supérieur à l'effort de compression à appliquer pour déformer élastiquement le ressort souple (81).

8. Dispositif (1) selon la revendication 7, **caractérisé par le fait que** le logement interne (75) comporte deux parois cylindriques (750, 751) reliées entre elles par une rampe présentant une paroi inclinée (752) convergente en direction du ressort dur (83) et agencée pour coopérer avec la butée ressort (85) lorsque de ressort dur (83) est comprimé de manière à placer la butée ressort (85) dans sa position centrée, la butée ressort (85) se présentant sous la forme d'un cylindre creux dont le diamètre extérieur est inférieur au diamètre intérieur de la paroi cylindrique (751) côté divergent de la rampe et dont le diamètre intérieur autorise le passage du guide (80) à travers la butée ressort (85) en position centrée, la butée ressort (85) comportant un aimant (851) sollicitant la butée ressort (85) en contact avec la paroi cylindrique (751) du logement interne (75) lorsque la butée ressort (85) est au niveau de la paroi cylindrique (751), de manière à placer la butée ressort (85) en position excentrée.

9. Dispositif (1) selon l'une quelconque des revendications 7 et 8, **caractérisé par le fait qu'**il comprend deux éléments annulaires (86a, 86b) pour limiter le déplacement axial du guide (80) dans le logement interne (75), les deux éléments annulaires (86a, 86b) étant solidaires de la paroi du logement interne (75) et agencés de telle sorte que lorsque les ressorts dur (83) et souple (81) sont détendus le guide (80) vient en butée contre l'élément annulaire dit avant (86b) apte à être traversé par une partie (56a) de l'élément d'éjection (50) venant en appui contre le guide (80) en position armée, et que lorsque le ressort souple (81) est comprimé le guide (80) vient en butée contre l'élément annulaire dit arrière (86a), côté face dirigée vers l'élément annulaire avant (86b), la bague de guidage (82) venant en appui contre la face de l'élément annulaire arrière (86a) opposée à la face dirigée vers l'élément annulaire avant (86b) lorsque le ressort dur (83) est détendu.

10. Procédé de lancement de drones (2) à l'aide d'un dispositif (1) de lancement par poussée à ressort tel que défini à l'une quelconque des revendications 1 à 9, **caractérisé par le fait qu'**il comprend les étapes successives suivantes :
- une étape de positionnement, comprenant positionner un drone (2) dans la chambre de lancement (34), l'ensemble d'éjection (5) étant verrouillé dans la position armée ;
- une étape de lancement du drone (2), comprenant activer l'électro-aimant (71) pour déplacer l'élément de détente (70) de la position de repos à la position de détente, ce par quoi l'ensemble d'éjection (5) est déverrouillé et éjecte le drone (2) hors du tube de lancement (3) ; et
- avant la répétition de l'étape de positionnement, une étape de repositionnement, comprenant ramener l'ensemble d'éjection (5) dans la position armée, dans laquelle il est verrouillé par l'au moins un élément de retenue (60).

## Patentansprüche

1. - Vorrichtung (1) zum Starten einer Drohne (2) durch Federschub, die Vorrichtung (1) umfassend ein längliches Startrohr (3), das ein erstes hinteres Ende (3b), das geschlossen ist, und ein zweites vordere Ende (3a), das offen ist, aufweist, und deren Inneres eine Startkammer (34) definiert, die dazu bestimmt ist, eine Drohne (2) aufzunehmen, und Einrichtungen (4) zum Auswerfen der Drohne (2) aus dem Startrohr (3), die Folgendes umfassen
- eine Auswurfanordnung (5), umfassend ein Auswurfelement (50), das in Längsrichtung verschiebbar in der Startkammer (34) montiert ist und dazu bestimmt ist, die Drohne (2) zu schieben, um sie aus dem Startrohr (3) auszuwerfen, und eine Druckfeder, die sogenannte Auswurffeder (51), die eine Längsachse koaxial zu der Längsachse (A1) des Startrohrs (3) aufweist und wovon ein erstes Ende an dem hinteren Ende (3b) des Startrohrs (3) anliegt und ein zweites Ende gegen das Auswurfelement (50) drückt, wobei die Auswurfanordnung (5) in eine scharfgestellte Position gebracht werden kann, in der die Auswurffeder (51) durch das Auswurfelement (50) zusammengedrückt ist,
- Verriegelungseinrichtungen (6) zum lösbaren Verriegeln der Auswurfanordnung (5) in der scharfgestellten Position, die Verriegelungseinrichtungen (6) mindestens umfassend ein Halteelement (60), das mit dem Startrohr (3) verbunden und zwischen einer Verriegelungsposition, in der das mindestens eine Halteelement (60) mit dem Auswurfelement (50) in Eingriff ist, um die Auswurfanordnung (5) gegen die Wirkung der Auswurffeder (51) in der scharfgestellten Position zu halten, und einer Entriegelungsposition, in der das mindestens eine Halteelement (60) von dem Auswurfelement (50) gelöst ist, bewegbar ist, und
- Steuerungseinrichtungen (7) zum Steuern der Entriegelung der Auswurfanordnung (5) durch Bewegen des mindestens einen Halteelements (60) aus der Verriegelungsposition in die Entriegelungsposition,
**dadurch gekennzeichnet, dass** die Steuerungseinrichtungen (7) Folgendes umfassen
- eine Auslöseaufnahme (37), die sich auf der Rückseite des Startrohrs (3) befindet und einen Elektromagneten (71) enthält, der geeignet ist, um mit einer Stromquelle (72) verbunden zu werden,
- mindestens ein Auslöseelement (70), das in der Auslöseaufnahme (37) unter der Wirkung eines Magnetfelds, das durch die Aktivierung des Elektromagneten (71) erzeugt wird, aus einer Ruheposition bewegbar ist, in der das mindestens eine Auslöseelement (70) das mindestens eine Halteelement (60) in der Verriegelungsposition hält, zu einer Auslöseposition, in der das mindestens eine Auslöseelement (70) das mindestens eine Halteelement (60) aus der Verriegelungsposition in die Entriegelungsposition bewegt hat, und
- Einrichtungen (74) zum Zurückholen des mindestens einen Auslöseelements (70) in die Ruheposition nach Deaktivierung des Elektromagneten (71),
und dadurch, dass die Auswurfeinrichtungen (4) ferner einen automatischen Neupositionierungsmechanismus (8) umfassen, der mit dem mindestens einen Auslöseelement (70) gekoppelt und angeordnet ist, um das mindestens eine Auslöseelement (70) bei fehlender Aktivierung des Elektromagneten (71) unter der Wirkung einer Bewegung des Auswurfelements (50) bis zu seiner scharfgestellten Position zwischen der Ruhe- und der Auslöseposition zu bewegen, der automatische Neupositionierungsmechanismus (8) eine Bewegung des mindestens einen Auslöseelements (70) aus der Ruheposition in die Auslöseposition gegen die Rückholeinrichtungen (74) vor dem Platzieren des Auswurfelements (50) in der scharfgestellten Stellung zulässt und eine Bewegung des mindestens einen Auslöseelements (70) aus der Auslöseposition in die Ruheposition unter der Wirkung der Rückholeinrichtungen (74) zulässt, sobald das Auswurfelement (50) in der scharfgestellten Stellung platziert ist.

2. - Vorrichtung (1) nach Anspruch 1, **dadurch gekennzeichnet, dass** die Auslöseaufnahme (37) in Form eines äußeren Hohlzylinders (37e), der fest mit dem Startrohr (3) verbunden ist, und eines inneren Hohlzylinders (37i), der fest mit dem äußeren Hohlzylinder (37e) verbunden ist und einen kleineren Durchmesser als der äußere Hohlzylinder (37e) aufweist, sodass dazwischen ihnen ein rohrförmiger Raum (36) gebildet ist, ist, der äußere (37e) und der innere (37i) Hohlzylinder koaxiale Längsachsen aufweisen, der Elektromagnet (71) hohlzylindrisch geformt ist und zwischen einer ersten, hinteren, axialen Seite des äußeren Hohlzylinders (37e) und einer ersten, hinteren, axialen Seite des inneren Hohlzylinders (37i) angeordnet ist, wobei seine Längsachse koaxial zu jener des äußeren (37e) und des inneren (37i) Hohlzylinders ist, und das Auslöseelement (70) ein Auslösestift (70) aus einem ferromagnetischen Material ist, der in dem inneren Hohlzylinder (37i) und in dem Elektromagneten (71) entlang der Längsachse der Auslöseaufnahme (37) verschiebbar montiert ist.

3. - Vorrichtung (1) nach Anspruch 2, **dadurch gekennzeichnet, dass** die Auslöseaufnahme (37) von der Auswurffeder (51) umgeben ist, das oder jedes Halteelement (60) aus einem ferromagnetischen Material gefertigt ist und in einer Durchgangsöffnung (38) aufgenommen ist, die in dem inneren Hohlzylinder (37i) bereitgestellt ist und deren Achse senkrecht zu der Längsachse der Auslöseaufnahme (37) ist, und das Auswurfelement (50) einen Druckkopf (54) umfasst, der senkrecht zu der Längsachse (A1) des Startrohrs (3) ist und an dem das zweite Ende der Auswurffeder (51) anliegt, und mindestens ein Halteorgan (55), das fest mit dem Druckkopf (54) verbunden ist und sich in der Verriegelungsposition in den rohrförmigen Raum (36) erstreckt, das mindestens eine Halteelement (60) in den rohrförmigen Raum (36) hervorsteht und konfiguriert ist, um die Auswurfanordnung (5) durch Ergreifen des mindestens einen Halteorgans (55) in der scharfgestellten Position zu halten, und das mindestens eine Halteelement (60) in der Entriegelungsposition in den inneren Hohlzylinder (37i) hervorsteht und konfiguriert ist, um den Auslösestift (70) auf dem Weg des Auslösestifts (70) zu berühren.

4. - Vorrichtung (1) nach Anspruch 3, **dadurch gekennzeichnet, dass** der Auslösestift (70) mindestens eine äußere Nut (702) umfasst, die angeordnet ist, um sich nur in der Auslöseposition gegenüber der mindestens einen Durchgangsöffnung (38) des inneren Hohlzylinders (37i) zu befinden, und die konfiguriert ist, um den Abschnitt des mindestens einen Halteelements (60) aufzunehmen, der in der Entriegelungsposition in den inneren Hohlzylinder (37i) hervorsteht, und dadurch, dass das mindestens eine Halteorgan (55) mindestens eine innere Nut (550) umfasst, die angeordnet ist, um sich nur in der scharfgestellten Position gegenüber der mindestens einen durchgehenden Öffnung (38) des inneren Hohlzylinders (37i) zu befinden und konfiguriert ist, um den Abschnitt des mindestens einen Halteelements (60) aufzunehmen, der in der Verriegelungsposition in den rohrförmigen Raum (36) hervorsteht.

5. - Vorrichtung (1) nach einem der Ansprüche 3 oder 4, **dadurch gekennzeichnet, dass** das mindestens eine Halteelement (60) in Form einer Kugel vorliegt und durch Translation entlang der assoziierten Durchgangsöffnung zwischen der Verriegelungsposition und der Entriegelungsposition bewegbar ist.

6. - Vorrichtung (1) nach einem der Ansprüche 2 bis 5, **dadurch gekennzeichnet, dass** der Bewegungsweg des Auslösestifts (70) zwischen der Ruhe- und der Auslöseposition einerseits durch einen axialen Anschlag (73) begrenzt wird, der mit einer ersten axialen Seite (70a) des Auslösestifts (70) fest verbunden ist, und geeignet ist, um in der Ruheposition an einer ersten, hinteren, axialen Seite des Elektromagneten (70) zur Anlage zu kommen, und andererseits durch eine Schulter (70d), die an dem Auslösestift (70) gebildet ist und geeignet ist, um in der Auslöseposition an einer zweiten, vorderen, axialen Seite des Elektromagneten (71) in Anlage zu kommen, wobei die Rückholeinrichtungen (74) des Auslösestifts (70) in die Ruheposition elastische Rückholeinrichtungen sind, wie beispielsweise eine Druckfeder (74), die an der zweiten, vorderen axialen Seite des inneren Hohlzylinders (37i) anliegt und an einer zweiten axialen Seite (70b) des Auslösestifts (70) anliegt.

7. - Vorrichtung (1) nach einem der Ansprüche 2 bis 6, **dadurch gekennzeichnet, dass** der automatische Neupositionierungsmechanismus (8) in einer inneren Aufnahme (75) des Auslösestifts (70) aufgenommen ist und eine Führung (80), die in der inneren Aufnahme (75) entlang der Längsachse der Auslöseaufnahme (37) axial bewegbar montiert und konfiguriert ist, um mit dem Auswurfelement (50) zusammenzuwirken, eine sogenannte weiche Feder (81), die zwischen und in Anlage an der Führung (80) und einem Führungsring (82), der von der Führung (80) durchquert wird und gleitend in der inneren Aufnahme (75) montiert ist, montiert ist, eine sogenannte harte Feder (83), die zwischen dem Auslösestift (70) und einem Hammer (84) montiert ist, der seinerseits gleitend in der inneren Aufnahme (75) montiert ist, umfasst, wobei die weiche (81) und die harte (83) Feder Druckfedern sind, die konzentrisch und koaxial zu der Längsachse der Auslöseaufnahme (37) sind, und ein Federanschlag (85) zwischen den Hammer (84) und den Führungsring (82) eingefügt ist und diese berührt, wobei der Federanschlag (85) zwischen einer exzentrischen Position in Bezug auf die Längsachse der inneren Aufnahme (37), in der sich die Führung (80) nicht axial gegen die flexible Feder (81) bewegen darf, und einer zentrierten Position bewegbar ist, in der die Führung (80) geeignet ist, um sich gegen die weiche Feder (81) zu bewegen, wobei die Rückholeinrichtungen (74) konfiguriert sind, sodass die Kraft, die ausgeübt werden muss, um der Wirkung der Rückholeinrichtungen (74) entgegenzuwirken, kleiner ist als die Druckkraft, die ausgeübt werden muss, um die harte Feder (83) elastisch zu verformen, und größer ist als die Druckkraft, die ausgeübt werden muss, um die weiche Feder (81) elastisch zu verformen.

8. - Vorrichtung (1) nach Anspruch 7, **dadurch gekennzeichnet, dass** die innere Aufnahme (75) zwei zylindrische Wände (750, 751) umfasst, die miteinander durch eine Rampe verbunden sind, die eine geneigte Wand (752) aufweist, die in Richtung der harten Feder (83) konvergiert und angeordnet ist, um mit dem Federanschlag (85) zusammenzuwirken, wenn die harte Feder (83) zusammengedrückt wird, um den Federanschlag (85) in seine zentrierte Position zu bringen, wobei der Federanschlag (85) in Form eines Hohlzylinders vorliegt, dessen Außendurchmesser kleiner ist als der Innendurchmesser der zylindrischen Wand (751) auf der divergierenden Seite der Rampe und dessen Innendurchmesser den Durchgang der Führung (80) durch den Federanschlag (85) in der zentrierten Position zulässt, der Federanschlag (85) umfassend einen Magneten (851), der den Federanschlag (85) in Kontakt mit der zylindrischen Wand (751) der inneren Aufnahme (75) vorspannt, wenn der Federanschlag (85) auf der Höhe der zylindrischen Wand (751) ist, um den Federanschlag (85) in eine exzentrische Position zu bringen.

9. - Vorrichtung (1) nach einem der Ansprüche 7 oder 8, **dadurch gekennzeichnet, dass** sie zwei ringförmige Elemente (86a, 86b) umfasst, um die axiale Bewegung der Führung (80) in der inneren Aufnahme (75) zu begrenzen, die zwei ringförmigen Elemente (86a, 86b) fest mit der Wand der inneren Aufnahme (75) verbunden und angeordnet sind, sodass, wenn die harte (83) und die weiche (81) Feder entspannt sind, die Führung (80) in Anlage an dem vorderen ringförmigen Element (86b) kommt, das geeignet ist, von einem Teil (56a) des Auswurfelements (50) durchquert zu werden, das in der scharfgestellten Position in Anlage an der Führung (80) kommt, und dass, wenn die flexible Feder (81) zusammengedrückt ist, die Führung (80) mit der zum vorderen ringförmigen Element (86b) gerichteten Seite an dem sogenannten hinteren ringförmigen Element (86a) in Anlage kommt, der Führungsring (82) an der Seite des hinteren ringförmigen Elements (86a) in Anlage kommt, die der Seite gegenüberliegt, die zu dem vorderen ringförmigen Element (86b) gerichtet ist, wenn die harte Feder (83) entspannt ist.

10. - Startverfahren von Drohnen (2) mithilfe einer Vorrichtung (1) zum Starten durch Federschub, wie definiert in einem der Ansprüche 1 bis 9, **dadurch gekennzeichnet, dass** es die folgenden aufeinanderfolgenden Schritte umfasst
- einen Positionierungsschritt, umfassend ein Positionieren einer Drohne (2) in der Startkammer (34) umfasst, wobei die Auswurfanordnung (5) in scharfgestellter Position verriegelt ist;
- einen Schritt zum Starten der Drohne (2), umfassend ein Aktivieren des Elektromagneten (71), um das Auslöseelement (70) aus der Ruheposition in die Auslöseposition zu bewegen, wodurch die Auswurfanordnung (5) entriegelt wird und die Drohne (2) aus dem Startrohr (3) auswirft; und
- vor der Wiederholung des Positionierungsschritts einen Neupositionierungsschritt, umfassend ein Zurückholen der Auswurfanordnung (5) in die scharfgestellte Position, in der sie durch das mindestens eine Halteelement (60) verriegelt ist.

## Claims

1. - A device (1) for launching a drone (2) by spring thrust, wherein said device (1) comprises a longitudinal launch tube (3) having a first, rear, closed end (3b) and a second, front, open end (3a), the interior of which defines a launch chamber (34) intended to receive said drone (2), and ejection means (4) for ejecting the drone (2) from the launch tube (3), which comprises:
- an ejector assembly (5) comprising an ejector element (50), longitudinally slidably mounted in the launch chamber (34) and intended to push the drone (2) to eject it from the launch tube (3), and a compression spring, so called ejector spring (51), having a longitudinal axis coaxial with the longitudinal axis (A1) of the launch tube (3) and of which a first end bears against the rear end (3b) of the launch tube (3) and a second end bears against the ejector element (50), the ejector assembly (5) being able to be placed in an armed position, in which the ejector spring (51) is compressed by the ejector element (50),
- locking means (6) for releasably locking the ejector assembly (5) in the armed position, the locking means (6) comprising at least one retaining element (60) connected to the launch tube (3) and movable between a locking position, in which the at least one retaining element (60) is engaged with the ejector element (50) so as to hold the ejector assembly (5) in the armed position, against the action of the ejector spring (51), and an unlocking position, in which the at least one retaining element (60) is disengaged from the ejector element (50), and
- control means (7) for controlling the unlocking of the ejector assembly (5), by moving the at least one retaining element (60) from the locking position to the unlocking position,
**characterized in that** the control means (7) comprises:
- a trigger housing (37) located at the rear of the launch tube (3) and containing an electromagnet (71) able to be connected to an electricity supply (72),
- at least one trigger element (70) which is movable in the trigger housing (37), under the action of a magnetic field created by activation of the electromagnet (71), from a rest position, in which the at least one trigger element (70) retains the at least one retaining element (60) in the locking position, to a trigger position, in which the at least one trigger element (70) has moved the at least one retaining element (60) from the locking position to the unlocking position, and
- return means (74) for returning the at least one trigger element (70) to the rest position after deactivation of the electromagnet (71),
and **in that** the ejection means (4) further comprises an automatic repositioning mechanism (8) coupled to the at least one trigger element (70) and arranged to move the at least one trigger element (70) between the rest and trigger positions, in the absence of activation of the electromagnet (71), under the effect of a movement of the ejector element (50) to its armed position, the automatic repositioning mechanism (8) allowing a movement of the at least one trigger element (70) from the rest position to the trigger position, against the action of the return means (74), before the ejector element (50) is placed in the armed position, and allowing a movement of the at least one trigger element (70) from the trigger position to the rest position, under the action of the return means (74), once the ejector element (50) has been placed in the armed position.

2. - The device (1) according to claim 1, **characterized in that** the trigger housing (37) is in the form of an external hollow cylinder (37e) which is integral with the launch tube (3) and an internal hollow cylinder (37i) integral with the external hollow cylinder (37e) and of diameter less than that of the external hollow cylinder (37e) such that a tubular space (36) is formed between them, the external (37e) and internal (37i) hollow cylinders having coaxial longitudinal axes, the electromagnet (71) being of hollow cylindrical form and being arranged between a first, rear, axial side of the external hollow cylinder (37e) and a first, rear, axial side of the internal hollow cylinder (37i) with its longitudinal axis coaxial with that of the external (37e) and internal (37i) hollow cylinders, and the trigger element (70) is a trigger pin (70) made of a ferromagnetic material and mounted in the internal hollow cylinder (37i) and in the electromagnet (71) so as to be slidable along the longitudinal axis of the trigger housing (37).

3. - The device (1) according to claim 2, **characterized in that** the trigger housing (37) is surrounded by the ejector spring (51), the or each retaining element (60) is made of a ferromagnetic material and is received in a through opening (38) provided in the internal hollow cylinder (37i) and having an axis perpendicular to the longitudinal axis of the trigger housing (37), and the ejector element (50) comprises a thrust head (54) which is perpendicular to the longitudinal axis (A1) of the launch tube (3) and against which the second end of the ejector spring (51) bears, and at least one holding member (55) which is integral with the thrust head (54) and extends into the tubular space (36), in the locking position, the at least one retaining element (60) projecting into the tubular space (36) and being configured to hold the ejector assembly (5) in the armed position by gripping the at least one holding member (55), and in the unlocking position, the at least one retaining element (60) projecting into the internal hollow cylinder (37i) and being configured to come into contact with the trigger pin (70) in the path of the trigger pin (70).

4. - The device (1) according to claim 3, **characterized in that** the trigger pin (70) includes at least one external groove (702) arranged so as to be facing the at least one through opening (38) of the internal hollow cylinder (37i) only in the trigger position and configured to receive the portion of the at least one retaining element (60) projecting into the internal hollow cylinder (37i) in the unlocking position, and **in that** the at least one holding member (55) comprises at least one internal groove (550) arranged so as to be facing the at least one through opening (38) of the internal hollow cylinder (37i) only in the armed position and configured to receive the portion of the at least one retaining element (60) projecting into the tubular space (36) in the locking position.

5. - The device (1) according to any one of claims 3 and 4, **characterized in that** the at least one retaining element (60) is in the form of a ball and is movable between the locking position and the unlocking position by movement in translation along the associated through opening.

6. - The device (1) according to any one of claims 2 to 5, **characterized in that** the stroke of the trigger pin (70) when moving between the rest and trigger positions is limited, on the one hand, by an axial stop (73) integral with a first axial side (70a) of the trigger pin (70) and able come to bear against a first, rear, axial side of the electromagnet (71) in the rest position, and on the other hand, by a shoulder (70d) formed on the trigger pin (70) and able to come to bear against a second, front, axial side of the electromagnet (71) in the trigger position, the return means (74) for returning the trigger pin (70) toward the rest position being elastic return means, such as a compression spring (74), bearing against the second, front, axial side of the internal hollow cylinder (37i) and bearing against a second axial side (70b) of the trigger pin (70).

7. - The device (1) according to any one of claims 2 to 6, **characterized in that** the automatic repositioning mechanism (8) is received in an internal housing (75) of the trigger pin (70) and comprises a guide (80) mounted so as to be axially movable in the internal housing (75), along the longitudinal axis of the trigger housing (37), and configured to cooperate with the ejector element (50), a so-called soft spring (81) mounted between and bearing against the guide (80) and a guide ring (82) that is traversed by the guide (80) and is slidably mounted in the internal housing (75), a so-called hard spring (83) mounted between the trigger pin (70) and a hammer (84) itself slidably mounted in the internal housing (75), the soft (81) and hard (83) springs being concentric compression springs coaxial with the longitudinal axis of the trigger housing (37), and a spring stop (85) interposed between the hammer (84) and the guide ring (82) and coming into contact with them, the spring stop (85) being movable between an offset position relative to the longitudinal axis of the internal housing (37), in which the guide (80) is not allowed to move axially against the action of the soft spring (81), and a centered position, in which the guide (80) is able to move against the action of the soft spring (81), the return means (74) being configured such that the force to be applied to oppose the action of the return means (74) is less than the compression force to be applied to elastically deform the hard spring (83) and greater than the compression force to be applied to elastically deform the soft spring (81).

8. - The device (1) according to claim 7, **characterized in that** the internal housing (75) comprises two cylindrical walls (750, 751) connected together by a ramp presenting an inclined wall (752) converging in the direction of the hard spring (83) and arranged to cooperate with the spring stop (85) when the hard spring (83) is compressed so as to place the spring stop (85) in its centered position, the spring stop (85) being in the form of a hollow cylinder the external diameter of which is less than the internal diameter of the cylindrical wall (751) on the divergent side of the ramp, and the internal diameter of which allows the guide (80) to pass through the spring stop (85) in the centered position, the spring stop (85) comprising a magnet (851) attracting the spring stop (85) into contact with the cylindrical wall (751) of the internal housing (75) when the spring stop (85) is at the cylindrical wall (751), so as to place the spring stop (85) in the offset position.

9. - The device (1) according to any one of claims 7 and 8, **characterized in that** it comprises two annular elements (86a, 86b) for limiting the axial movement of the guide (80) in the internal housing (75), the two annular elements (86a, 86b) are integral with the wall of the internal housing (75) and arranged such that when the hard (83) and soft (81) springs are relaxed, the guide (80) comes into abutment against the so-called front annular element (86b) able to be traversed by a portion (56a) of the ejector element (50) coming to bear against the guide (80) in the armed position, and such that when the soft spring (81) is compressed, the guide (80) comes into abutment against the so-called rear annular element (86a), on the side face directed toward the front annular element (86b), the guide ring (82) coming to bear against the face of the rear annular element (86a) opposite the face directed toward the front annular element (86b) when the hard spring (83) is relaxed.

10. - A method for launching drones (2) using a launch device (1) by spring thrust as defined in any one of claims 1 to 9, **characterized in that** it comprises the following successive steps:
- a positioning step, comprising positioning a drone (2) in the launch chamber (34), the ejector assembly (5) being locked in the armed position;
- a step of launching the drone (2), comprising activating the electromagnet (71) to move the trigger element (70) from the rest position to the trigger position, whereby the ejector assembly (5) is unlocked and ejects the drone (2) from the launch tube (3); and
- before repeating the positioning step, a repositioning step, comprising returning the ejector assembly (5) to the armed position, in which it is locked by the at least one retaining element (60).
